# EUROPEAN PATENT SPECIFICATION

(11) **EP 2 518 378 B1**
(45) Date of publication and mention of the grant of the patent: **25.12.2013**
(21) Application number: 11164196.5
(22) Date of filing: 28.04.2011
(51) Int. Cl.: F16K 31/00

(54) **Piezo valve**
Piezoventil
Vanne piézo-électrique

(43) Date of publication of application: 31.10.2012
(73) Proprietor: Inzi Controls Co., Ltd., Shihung-shi, Kyunggi-do 429-843 (KR)
(72) Inventor: Lee, Jin Woo, 429-778, Gyeonggi-do (KR); Lim, Jong Dae, 426-772, Gyeonggi-do (KR); Park, Sang Hyoun, 429-450, Gyeonggi-do (KR)
(74) Representative: Kudlek & Grunert Patentanwälte

(56) References cited:
- EP-A1- 0 538 236
- EP-A1- 1 564 464
- DE-B3-102008 051 837
- GB-A- 2 163 833

## Description

### Field of the invention

The present invention relates to a piezo valve.

### Description of the Related Art

Generally, a piezo valve opens or closes a flow path using a piezo plate bending-strained by an electric voltage. In recent years, these piezo valves are installed in vehicles and control the supply of engine fuel or control the supply of air for airbags embedded in the backs of passenger seats.

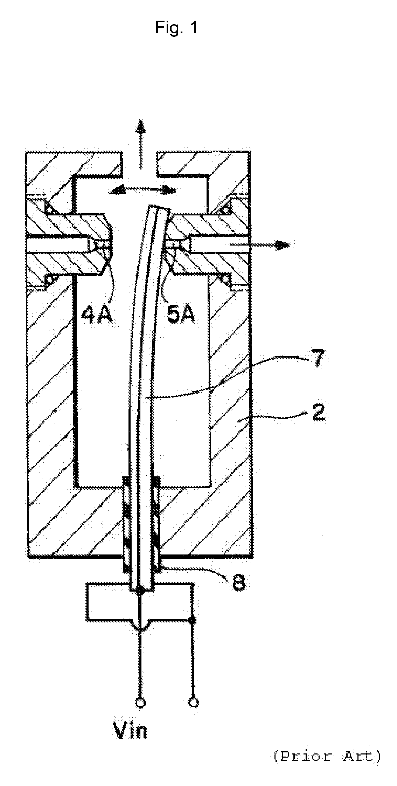

Fig. 1 is a sectional view illustrating the construction of a conventional piezo valve. In the conventional piezo valve, a piezo plate 7 is installed in a casing 2, as shown in Fig. 1, and is bending-strained at a first end thereof by an electric voltage applied thereto and opens or closes valve seats 4A and 5A of the casing 2. The piezo valve may be configured to open or close the two valve seats 4A and 5A of the casing 2, as shown in Fig. 1, or may be configured to open or close only one of the two valve seats 4A and 5A unlike the embodiment shown in the drawing. In the piezo valve, the second end of the piezo plate 7 may be fastened to the casing 2 using a rubber plate 8, as shown in Fig. 1, or may be fastened to the casing 2 using epoxy mixed with a hardening agent.

However, because the piezo plate 7 of the piezo valve is fastened to the casing 2 at the second end thereof using the rubber plate 8 or the epoxy mixed with the hardening agent, it is very difficult to fasten the piezo plate 7 to the casing and it is impossible to adjust the fastened position of the piezo plate 7. Further, because the first end of the piezo plate 7 directly opens or closes the valve seats 4A and 5A, the conventional piezo valve is problematic in that it has low sealing effect and low precision.

Therefore, in recent years, in an effort to increase both the sealing effects and the precision of the piezo valve, a piezo valve, in which a rubber valve disc is attached to the first end of the piezo plate 7 using a bonding agent, has been proposed. However, in the piezo valve, the rubber valve disc is directly attached to the first end of the piezo plate 7 using the bonding agent, so that the properties of the bending-strained end of the piezo plate 7 may be reduced or the end of the piezo plate 7 may be twisted, thereby reducing the valve performance of the piezo valve or reducing the precision of the piezo valve.

In recent years, a piezo valve having both a circuit board (not shown) and a pressure sensor (not shown) in the casing 2 has been marketed. The piezo valve is advantageous in that an electric voltage is applied to the piezo plate 7 through the circuit board and the pressure inside the casing 2 can be detected by the pressure sensor. However, the piezo valve is problematic in that a fluid passes both by the circuit board and by the pressure sensor, and that the fluid shortens the life spans of the circuit board and the pressure sensor and the piezo valve cannot realize precise control of the flow of a liquid fluid.

A piezo valve according to the preamble of claim 1 is known from German Patent DE 10 2008 051 837 B3. Similar piezo valves are known from EP 1 564 464 A1 and EP 0 538 236 A1.

### SUMMARY OF THE INVENTION

The present invention is intended to propose a piezo valve, in which a fastener for fastening a piezo plate is configured to fasten the piezo plate in a state in which the fastened position of the piezo plate is adjustable.

In order to achieve the above object, according to the present invention, there is provided a piezo valve according to claim 1. Advantageous embodiments of the present invention are subject of the claims 2 - 14.

As described above, in the piezo valve of the present invention, the end of the piezo plate is fastened using the fastener, so that the fastened end of the piezo plate is prevented from being bending-strained, and particularly, the piezo plate can be fastened in a state in which the fastened position of the piezo plate can be adjusted using the fastener.

### BRIEF DESCRIPTION OF THE DRAWINGS

FIG. 1 is a sectional view illustrating the construction of a conventional piezo valve;
Fig. 2 is an exploded perspective view illustrating a piezo valve according to an embodiment of the present invention;
Fig. 3 is a perspective view illustrating a piezo plate, a shift part and a fastener shown in Fig. 2;
Fig. 4 is a sectional view taken along line A-A' of Fig. 2;
Fig. 5 is a sectional view taken along line B-B' of Fig. 2;
Fig. 6 is a sectional view taken along line A-A' of Fig. 2 and illustrating operation of the piezo plate;
Fig. 7 is a sectional view taken along line B-B' of Fig. 2 and illustrating operation of the piezo plate; and
Fig. 8 is a cross-sectional view illustrating a piezo valve according to another embodiment of the present invention.

### DETAILED DESCRIPTION OF THE INVENTION

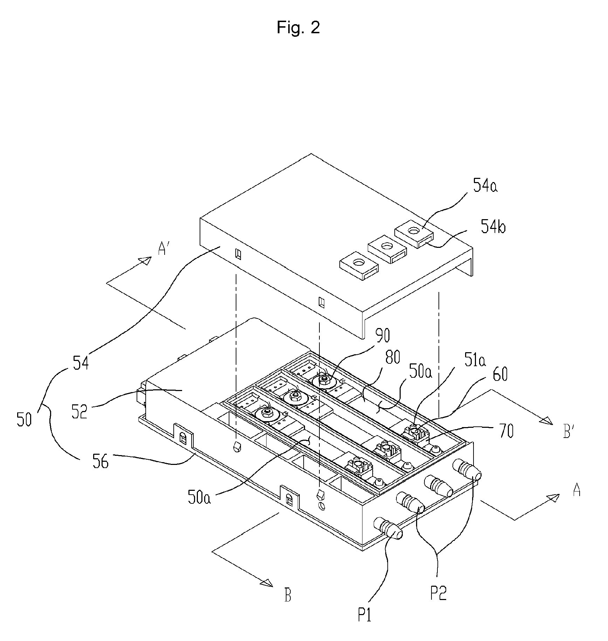

As shown in Fig. 2, the piezo valve according to an embodiment of the present invention includes a valve body 50 having separate parts, a valve unit 60, a piezo plate 80 and a fastener 90. The valve body 50 may comprise a casing 52, a first cover 54 and a second cover 56, as shown in the drawing.

An internal chamber 50a is defined in the casing 52, as shown in the drawing. The casing 52 is open at an end thereof, as shown in the drawing, so that the internal chamber 50a is exposed to the atmosphere. The casing 52 may have a plurality of internal chambers 50a, as shown in the drawing, or may have a single internal chamber unlike the embodiment shown in the drawing. When the plurality of internal chambers 50a is defined in the casing, it is preferable that the chambers be defined in the form of a continuous parallel arrangement. The casing 52 may be provided in a sidewall thereof with a pump port P1 for introducing compressed air into the casing 52 and a bidirectional port P2 for introducing or expelling air into or from the casing 52, as shown in the drawing.

Here, the above-mentioned pump port P1 is a path through which compressed air pumped by a pump (not shown) flows. Further, the above-mentioned bidirectional port P2 is a path for supplying compressed air, which has been introduced into the casing 52 through the pump port P1, to an airbag installed in a seat back (not shown) or for expelling the compressed air from the airbag to the internal chamber 50a of the casing 52. Of course, both the pump port P1 and the bidirectional port P2 communicate with the internal chamber 50a.

The first cover 54 is assembled with the open side of the casing 52, as shown in the drawing. The second cover 56 is assembled with the other side of the casing 52, which is the lower side of the casing 52, as shown in the drawing. The first cover 54 communicates with a first valve seat V1, which will be described later herein, and is provided with a pocket 54a, which has a sound absorbing material 54b, such as a sponge. The pocket 54a is formed at a location leveled with a valve unit 60, which is installed in the casing 52, as shown in the drawing.

The valve unit 60 is installed in the internal chamber 50a of the casing 52 at a location near the bidirectional port P2, as shown in the drawing. The valve unit 60 is received in a shift part 70 and is surrounded by a vertical guide bar 51a, as shown in the drawing. It is preferable that the guide bar 51a comprise a plurality of guide bars and surround the valve unit 60, as shown in the drawing. The valve unit 60 is moved by the piezo plate 80.

The piezo plate 80 is connected to the shift part 70 at a first end thereof and is connected to the fastener 90 at a second end thereof, as shown in the drawing. The shift part 70 is a hollow part, as shown in the drawing, thus receiving the valve unit 60 in the hollow part. The shift part 70 is a part capable of moving the valve unit 60 in response to the bending strain of the piezo plate 80, as will be described later herein. In other words, the piezo plate 80 does not directly move the valve unit 60, but indirectly moves the valve unit 60 using the shift part 70. The shift part 70 is connected to the valve unit 60 by a connection part, which will be described later herein. Thus, the shift part 70 moves the valve unit 60 using the connection part. Both the shift part 70 and the connection part may be omitted in accordance with the construction of the valve unit 60. For example, when the valve unit 60 is configured to be directly moved by the piezo plate 80, both the shift part 70 and the connection part can be omitted.

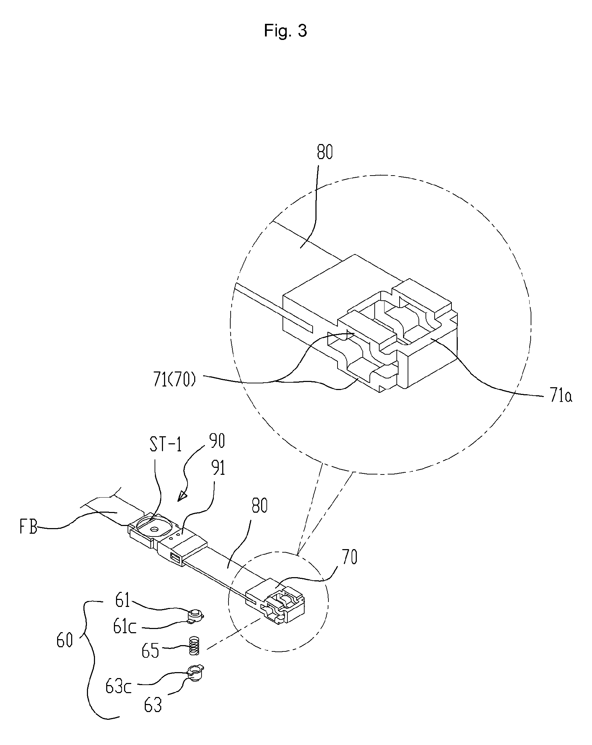

As shown in Fig. 3, the piezo plate 80 may be integrated with both the shift part 70 and an insulating stick 91 of the fastener 90 into a single structure by an insert molding process. However, the shift part 70 and the insulating stick 91 may be produced separately from the piezo plate 80 and may be mounted to opposite ends of the piezo plate 80 by a bolting process. The shift part 70 comprises a fork 71, in which the front ends of tines are connected to each other by a connector 71a, as shown in the enlarged view. The fork 71 comprises two forks provided in the upper and lower parts of the shift part, respectively, as shown in the drawing. That is, the fork 71 is designed as a double fork. Because the ends of the tines of the fork 71 are connected to each other by the connector 71a, the strength of the fork is increased. However, when the fork 71 is made of a strong material, the connector 71a may be omitted.

The valve unit 60 may comprise a first plunger 61 and a second plunger 63, which are arranged to be opposed to each other, and a spring 65, which is interposed between the first and second plungers 61 and 63, as shown in the drawing. Alternatively, the valve unit 60 may comprise a rubber disc (not shown) attached to the first end of the piezo plate 80. The construction of the valve unit 60 is not limited to that shown in the drawings. The valve unit 60 is laterally inserted into the shift part 70 from a side, as shown in the drawing.

Here, the above-mentioned first and second plungers 61 and 63 are provided with respective connection parts for separably connecting the plungers 61 and 63 to the shift part 70. The connection parts may comprise hooking protrusions 61c and 63c, which are formed in the first and second plungers 61 and 63 in the form of flanges, as shown in the drawing. When the valve unit 60 is inserted into the shift part 70, the hooking protrusions 61c and 63c are hooked by the fork 71 of the shift part 70. Therefore, the hooking protrusions 61c and 63c can prevent the first and second plungers 61 and 63 from being undesirably removed from the fork 71 of the shift part 70 and can separably connect the first and second plungers 61 and 63 to the fork 71.

Further, the insulating stick 91 of the fastener 90 may be provided with a stepped part ST-1, as shown in the drawing. The stepped part ST-1 may comprise a stepped circular depression, as shown in the drawing. A flexible PCB FB, which is connected to the piezo plate 80, may be connected to the fastener 90.

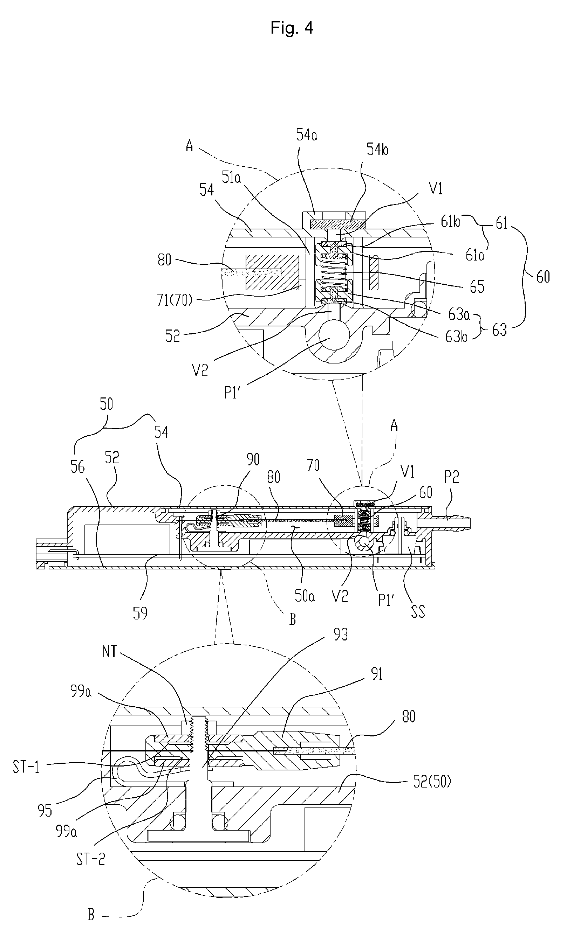

As shown in Fig. 4, a circuit board 59 is installed in a lower part of the casing 52 of the valve body 50 in a way such that the circuit board 59 can be separated from the internal chamber 50a of the casing 52. The circuit board 59 is protected from an external shock by the second cover 56, which is mounted to the lower end of the casing 52, as shown in the drawing. The valve body 50 may comprise the casing 52, the first cover 54 and the second cover 56, as shown in the drawing, or may comprise the casing 52 and the first cover 54 without having the second cover unlike the embodiment shown in the drawings. When the valve body 50 comprises the casing 52 and the first cover 54 without having the second cover, the circuit board 59 may be installed in the casing 52. Described in brief, the valve body 50 may be constructed unlike the construction shown in the drawings. That is, the construction of the valve body 50 is not limited to that shown in the drawings.

The casing 52 is provided with a port line P1' of the pump port P1 at a location near the bidirectional port P2, as shown in the drawing. The casing 52 is also provided with a second valve seat V2 at a predetermined location in the end thereof having the bidirectional port P2, as shown in the enlarged view of portion A. The second valve seat V2 communicates with the port line P1'.

The first cover 54 is mounted to the casing 52 and closes the internal chamber 50a, which is open upwards in the casing 52, as shown in the drawing. The first cover 54 has the first valve seat V1 having a hole shape, as shown in the enlarged view of portion A. The first valve seat V1 is opposed to the second valve seat V2 of the casing 52, as shown in the enlarged view of portion A, and communicates with both the port and the internal chamber 50a. In other words, the first valve seat V1 and the second valve seat V2 are aligned with each other along an axis. In the first cover 54, the pocket 54a which is open at one end thereof communicates with the valve seat V1, as shown in the enlarged view of portion A. A sound absorbing material 54b, such as a sponge, is provided in the pocket 54a, as shown in the enlarged view.

The valve unit 60 is inserted in the fork 71 of the shift part 70 and closes both the first valve seat V1 and the second valve seat V2, as shown in the enlarged view of portion A. Here, both the first plunger 61 and the second plunger 63 are elastically biased by the spring 65, so that the valve unit 60 can close both the first valve seat V1 and the second valve seat V2. Here, each of the above-mentioned first and second plungers 61 and 63 may comprise a plunger body 61a, 63a receiving the spring 65 therein and a rubber plug 61b, 63b mounted to an end of the plunger body 61a, 63a and opening or closing an associated one of the first and second valve seats V1, V2, as shown in the enlarged view. The rubber plug 61b, 63b may be fastened to the plunger body 61a, 63a by a fitting process, as shown in the enlarged view, or may be fastened to the plunger body 61a, 63a by a bonding process unlike the method shown in the drawing.

The piezo plate 80 is incased in the casing 52 of the valve body 50 in the form of a cantilever, as shown in the drawing. Of course, the cantilever type encasement of the piezo plate 80 in the casing is realized by fastening the second end of the piezo plate to the casing 52 using the fastener 90. Therefore, the first and second ends of the piezo plate 80 form a free end and a fixed end, respectively.

The fastener 90 may include an insulating stick 91, a post 93, a biasing member 95 and a stopper, as shown in the enlarged view of part B.

The insulating stick 91 is made of an insulating material, such as plastic, and is integrally combined with the second end of the piezo plate 80, as shown in the drawing, thus protecting the second end of the piezo plate 80 in an insulating state. The insulating stick 91 is fixed to the post 93, as will be described later herein, thus fastening the second end of the piezo plate 80 to the post 93.

The post 93 is fixed to the casing 52, as shown in the drawing. The post 93 may be a bolt, as shown in the drawing, or may be integrated with the casing 52 into a single body during a process of forming the casing. The insulating stick 91 is fitted over the post 93, as shown in the drawing.

The biasing member 95 may comprise a plate spring, as shown in the enlarged view, or may comprise a coil spring fitted over the post 93. The biasing member 95 elastically biases the second end (lower end) of the insulating stick 91, as shown in the drawing.

The stopper may comprise a nut NT, as shown in the enlarged view. The nut NT is tightened to the post 93 and compresses the insulating stick 91 at a location opposed to the biasing member 95. Therefore, when the insulating stick 91 is biased by the biasing member 95 at a side opposed to the nut NT, the stick 91 is not removed from the post 93.

The insulating stick 91 may be provided with a force distributing unit for distributing the compressing force of the stopper outwards. The force distributing unit may comprise the stepped part ST-1, which is formed in the insulating stick 91 at a location around the post 93, as shown in the enlarged view. The force distributing unit may further comprise a sitting plate 99a, which is placed on the insulating stick 91 and is seated on the outside flat surface of the stepped part ST-1, as shown in the enlarged view. The sitting plate 99a may comprise a washer, which is fitted over the post 93 and is seated on the outside flat surface of the stepped part ST-1.

The insulating stick 91 may be provided with a force concentrating unit for concentrating the biasing force of the biasing member 95 inwards. The force concentrating unit may comprise a boss ST-2, which protrudes from the insulating stick 91 at a location around the post 93, as shown in the enlarged view. It is preferable that the force concentrating unit comprise a sitting plate 99a, which is placed below the insulating stick 91 and abuts on the boss ST-2. The sitting plate 99a may comprise a washer, which is fitted over the post 93 and abuts with the boss ST-2.

Here, unlike the embodiment shown in the drawings, the stopper may comprise a head (not shown) formed on the end of the post 93 or may comprise a snap ring (not shown) forcibly fitted over the end of the post 93, or may comprise a countersunk nut (not shown) tightened to the end of the post 93. The head, the snap ring or the countersunk nut is combined with the end of the post 93, thus compressing the insulating stick 91 fitted over the post 93. Therefore, the insulating stick 91 is not removed from the post 93. The above-mentioned head, the snap ring or the countersunk nut may be designed to have a 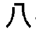 -shaped cross-section, which is similar to the cross-section of a typical lamp shade. Thus, the lower surface of the head, the snap ring or the countersunk nut can be in linear contact with the surface of the insulating stick 91, so that the head, the snap ring or the countersunk nut can transfer the compressing force to the outer parts of the insulating stick 91. In other words, the head, the snap ring or the countersunk nut can distribute the compressing force outwards in the insulating stick 91. When the head, the snap ring or the countersunk nut is designed as described above, the force distributing unit may be omitted. The above-mentioned structure of the head, the snap ring or the countersunk nut, and the 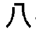 -shaped cross-section thereof may be easily realized by those skilled in the art, so that further explanation thereof is thus deemed unnecessary.

The outer surfaces of the first and second plungers 61 and 63 of the valve unit 60 are guided by the guide bars 51a, as shown in the enlarged view of portion A. The guide bars 51a may be integrated with the casing 52 into a single structure, as shown in the enlarged view, or may be realized by fixing pins or bolts to the casing 52. Further, a pressure sensor SS is mounted on the circuit board 59, as shown in the drawing. Because the pressure sensor SS is mounted on the circuit board 59, the pressure sensor SS is separated from the internal chamber 50a of the casing 52, as shown in the drawing. One end of the pressure sensor SS is inserted into the internal chamber 50a of the casing 52, as shown in the drawing.

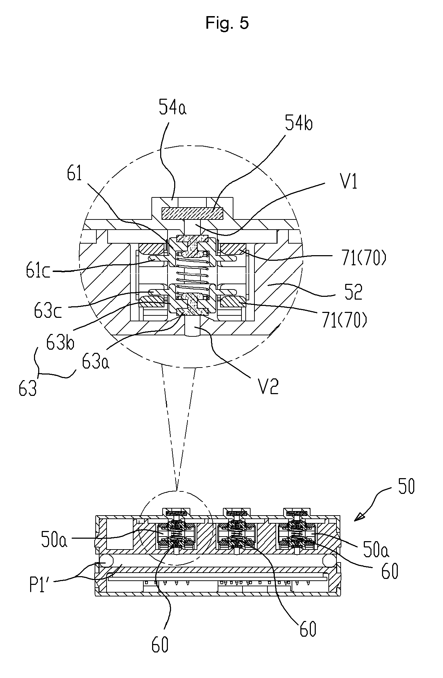

As shown in Fig. 5, several valve units 60 are installed in respective internal chambers 50a of the casing 52. The first and second plungers 61 and 63 of each valve unit 60 are biased by the spring 65 and are combined with the fork 71 of the shift part 70 by the hooking protrusions 61c and 63c, as shown in the enlarged view. In other words, the hooking protrusions 61c and 63c hook the first and second plungers 61 and 63 to the fork 71 of the shift part 70, so that the first and second plungers 61 and 63 can be detachably combined with the shift part 70.

The operation of the above-mentioned piezo valve according to the first embodiment of the present invention will be described hereinbelow with reference to Fig. 4 through Fig. 7.

As shown in the enlarged view of portion B of Fig. 4, the piezo plate 80 is fitted over and is fixed to the post 93 using the insulating stick 91. In the above state, because the insulating stick 91 is elastically biased by the biasing member 95, the fastened position of the piezo plate 80 can be adjusted. Described in detail, the second end of the piezo plate 80 can be mounted to the post 93 in a state in which the height of the piezo plate 80 can be adjusted. The fastened position of the piezo plate 80 can be changed in accordance with the flow rates both inside the port line P1' and inside the bidirectional port P2.

During a normal state of the piezo valve, the piezo plate 80 mounted to the post 93 is in a straight state, as shown in the drawing. In the above state, the valve unit 60 closes the first and second valve seats V1 and V2 using the first and second plungers 61 and 63 elastically biased by the spring 65, as shown in the enlarged view of portion A, so that fluid cannot pass through the first or second valve seat V1, V2.

When the piezo plate 80 is in the straight state, the hooking protrusions 61c and 63c of the connection part are by the fork 71 of the shift part 70, as shown in Fig. 5. Therefore, the first and second plungers 61 and 63 do not move, as shown in the enlarged view, so that they continuously close the first and second valve seats V1 and V2, respectively.

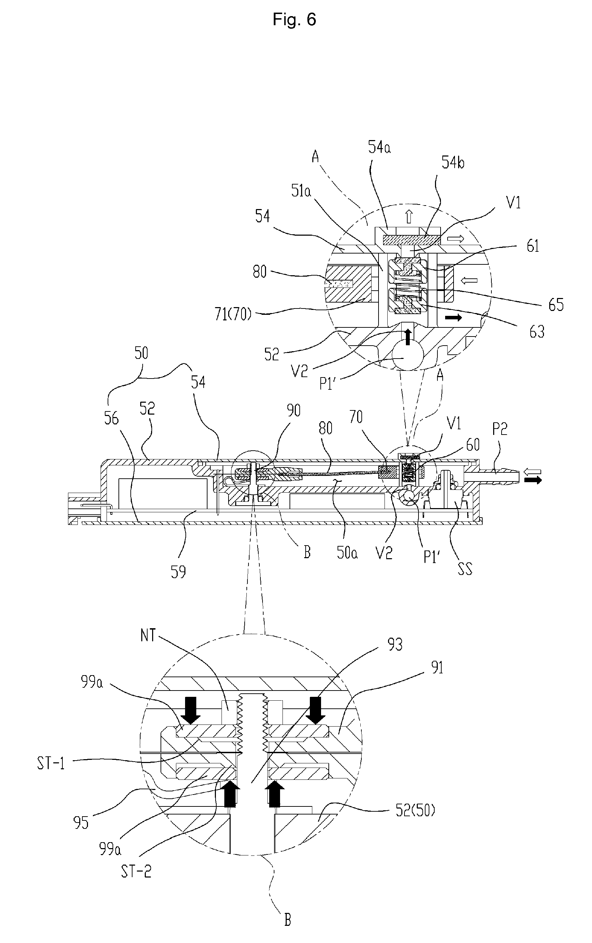

However, when voltage is applied to the piezo plate 80 from the circuit board 59, the piezo plate 80 is bending-strained at the first end thereof, as shown in Fig. 6, thus moving the shift part 70. When the fork 71 of the shift part 70 in the above state is moved upwards, as shown in the enlarged view of portion A, the fork 71 lifts the second plunger 63 upwards and opens the second valve seat V2. Therefore, the compressed air, which has been pumped by a pump (not shown) and has been introduced into the casing 52 through the second valve seat V2, flows through the bidirectional port P2 and is charged in an airbag installed in a seat back (not shown).

The fastener 90 securely holds the second end of the piezo plate 80 and thereby prevents the second end of the piezo plate 80 from being bending-strained. In the above state, both the biasing member 95 and the nut NT of the stopper compress the opposite sides of the insulating stick 91 and thereby let the insulating stick 91 prevent the second end of the piezo plate 80 from being moved. When the stepped part ST-1 is provided in a first surface of the insulating stick 91, as shown in the enlarged view of portion B, the fastener 90 can apply the compressing force of the stopper to the outside flat surface of the stepped part ST-1. In other words, the compressing force of the stopper can be applied to the outside part of the insulating stick 91, as shown by the arrows in the drawing. Further, when the boss ST-2 is provided in a second surface of the insulating stick 91, as shown in the enlarged view of portion B, the fastener 90 can apply the biasing force of the biasing member 95 to the boss ST-2. In other words, the biasing force of the biasing member 95 can be applied to the central part of the insulating stick 91, as shown by the arrows in the drawing. Here, the compressing force of the stopper and the biasing force of the biasing member 95 may be directly applied to the stepped part ST-1 and the boss ST-2, respectively, or may be indirectly applied thereto by respective sitting plates 99a.

In the present invention, because the compressing force of the stopper is distributed to the outside part of the first surface (upper surface) of the insulating stick 91 and the biasing force of the biasing member is concentrated to the central part of the second surface (lower surface) of the insulating stick 91, as shown in the drawing, the insulating stick 91 can be securely fastened. Described in detail, the insulating stick 91 is compressed simultaneously at the outside part of the upper surface thereof and at the central part of the lower surface thereof, so that the insulating stick 91 strongly resists the bending moment. Therefore, the insulating stick 91 can be securely fastened and thereby prevents the second end of the piezo plate 80 from being moved.

When both the compressing force and the biasing force are concentrated on a central part of the upper or lower surface of the insulating stick 91, the part of the insulating stick 91, to which both the compressing force and the biasing force are concentrated, functions as a hinge. In the above state, the insulating stick 91 cannot desirably resist bending moment. Further, when both the compressing force and the biasing force are distributed to an outside part of the upper or lower surface of the insulating stick 91, the strength of the part of the insulating stick 91, to which both the compressing force and the biasing force are applied, is increased and thereby disturbs the bending strain of the piezo plate 80. However, in the embodiment of the present invention, the compressing force is distributed to the outside part of the upper surface of the insulating stick 91 and the biasing force is concentrated on the central part of the lower surface of the insulating stick 91, the insulating stick 91 does not function as a hinge but provides a desired strength to the piezo plate 80 such that the piezo plate 80 can be bending-strained.

The reason why the piezo valve is configured such that the compressing force and the biasing force are applied to the insulating stick 91 at different positions is that the piezo plate 80 is a long member which is weak in bending moment. Particularly, because the first end of the piezo plate 80 is bending-strained, it is necessary to apply the compressing force and the biasing force to different positions. When the end of the piezo plate 80 is not bending-strained, it is not necessary to apply the compressing force and the biasing force to the different positions.

The pressure sensor SS senses pressure inside the internal chamber 50a of the casing 52 using the end thereof inserted into the internal chamber 50a. Therefore, the piezo valve according to the embodiment of the present invention can realize precise control of the flow rate. Further, the first valve seat V1 expels the air, which has been discharged from an airbag (not shown) into the casing through the bidirectional port P2, to the atmosphere. In the above state, the sound absorbing material 54b absorbs pneumatic noises generated during the expelling of the air.

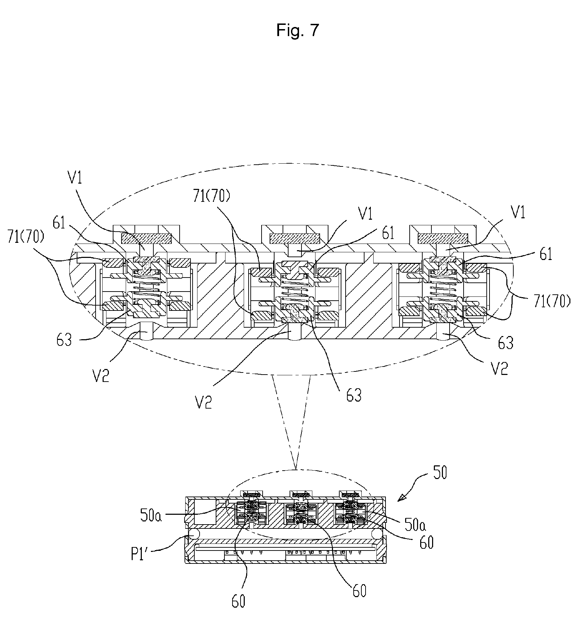

As shown in Fig. 7, the fork 71 of the shift part 70 can be moved upwards or downwards by the bending strain of the piezo plate 80. When the fork 71 is moved upwards, the fork lifts the second plunger 63 by the hooking protrusion 63c of the second plunger 63, as shown in the left section of the enlarged view, thus opening the second valve seat V2. However, when the fork 71 is moved downwards, the fork 71 moves the first plunger 61 downwards by the hooking protrusion 61c of the first plunger 61, as shown in the central section of the enlarged view, thus opening the first valve seat V1.

In the present invention, the second end of the piezo plate 80 is fixed by the fastener 90, so that it is possible to fasten the piezo plate 80 while adjusting the fastened position of the piezo plate 80. Further, because the insulating stick 91 of the fastener 90 mounted to the second end of the piezo plate 80 is fastened by the stopper in a state in which the stick 91 is elastically biased by the biasing member 95, the fastened position of the piezo plate 80 can be easily adjusted. Further, because the force distributing unit and the force concentrating unit can distribute and concentrate the compressing force and the biasing force, the second end of the piezo plate 80 can be securely fastened, so that the first end of the piezo plate 80 can be more stably bending-strained.

In the present invention, the first valve seat V1 and the second valve seat V2 are formed at opposite locations, so that the valve seats V1 and V2 can be easily opened and closed. Further, when the valve seats V1 and V2 are designed to be opened or closed by the first plunger 61 and the second plunger 63, which are elastically biased by the spring 65, it is possible to open or close the valve seats V1 and V2 at the same time. Further, the present invention can selectively open or close one of the two valve seats V1 and V2 by the bending-strain of the piezo plate 80.

Further, because the first valve seat V1 is formed in the casing 52 of the valve body 50 and the circuit board 59 is installed in the casing 52 in a state in which the circuit board 59 is separated from the internal chamber 50a, the circuit board 59 can be protected from the outside. Further, because the second valve seat V2 is formed in the first cover 54, the valve body 50 can be designed in the form of a divided structure and thereby the structure of the valve body 50 can be variously changed.

Further, because both the circuit board 59 and the pressure sensor SS are installed in a state in which they are separated from the internal chamber 50a of the valve body 50, it is possible to prevent the life spans of both the circuit board 59 and the pressure sensor SS from being reduced by the fluid flowing in the internal chamber 50a. Further, the pressure inside the internal chamber 50a can be sensed by the pressure sensor SS, and thereby the flow rate of the fluid flowing in the internal chamber 50a can be controlled in response to the sensed pressure.

Further, the shift part, which moves the valve unit 60, separately moves the first and second plungers 61 and 63 using the connection part 60, so that it is possible to easily control the ON/OFF operation of the first and second plungers 61 and 63. Further, the shift part comprises the fork 71 having a simple structure, so that the process that is used to produce the shift part can be an easy one. Further, because the hooking protrusions 61c and 63c of the connection part 60 can be integrally formed with the first and second plungers 61 and 63 when the plungers 61 and 63 are being formed by a process, it is possible to easily produce the connection part 60 and to stably connect the fork 71 to the first and second plungers 61 and 63.

Further, the guide bars 51a guide movement of the first and second plungers 61 and 63, so that the first and second plungers 61 and 63 can be stably moved and the precise control of the flow rate can be easily realized. Further, when a plurality of internal chambers 50a are formed in one casing 52, a plurality of piezo plate modules can be installed in the single casing 52. Further, when both the insulating stick 91 and the shift part 70 are formed in the piezo plate 80 by an insert molding process, it is possible to easily produce the piezo plate 80 in the form of an integrated module.

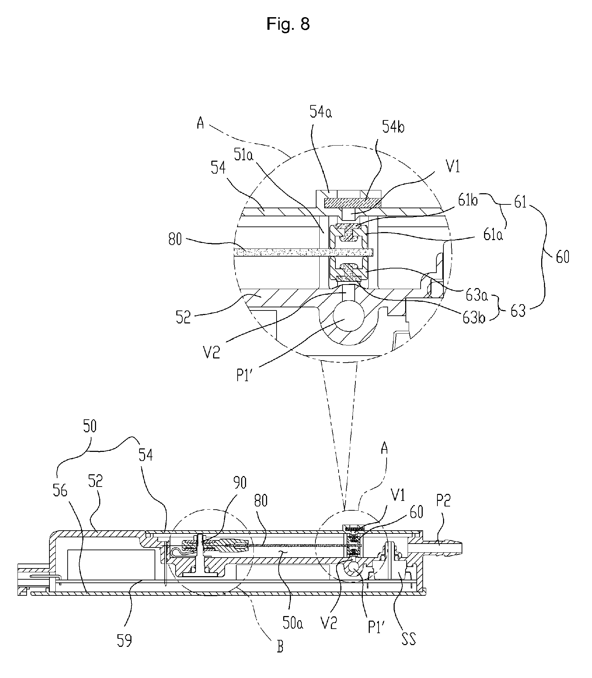

Fig. 8 is a cross-sectional view of a piezo valve according to a second embodiment of the present invention. The general shape of the piezo valve according to the second embodiment remains the same as that described for the first embodiment, but the valve unit 60 in the second embodiment is directly connected to the piezo plate 80 unlike the first embodiment.

As shown in Fig. 8, the piezo valve according to the second embodiment is a valve, in which both the shift part 70 and the hooking protrusions 61c and 63c of the connection part are omitted. In the piezo valve of the second embodiment, both the first plunger 61 and the second plunger 63 are directly mounted to the piezo plate 80, as shown in the enlarged view. The first plunger 61 and the second plunger 63 may be mounted to the piezo plate 80 using epoxy or a bending agent or by hot welding. Of course, in the second embodiment, the rubber plugs 61b and 63b may be directly mounted to the piezo plate 80 without using the plunger bodies 61a and 63a. In other words, the valve unit 60 may comprise only the rubber plugs 61b and 63b.

In the piezo valve according to the second embodiment, the valve unit 60 opens or closes one of the first and second valve seats V1 and V2 in response to a bending strain of the piezo plate 80. Described in brief, the piezo valve of the second embodiment is a valve, which is configured to open or close only one valve seat.

As described above, in the piezo valve of the second embodiment, the piezo plate 80 directly moves the valve unit 60 unlike the first embodiment. In other words, unlike the piezo valve according to the first embodiment, in which the valve unit 60 can be indirectly moved using both the shift part 70 and the connection part, the piezo valve of the second embodiment is configured to directly move the valve unit 60.

## Claims

1. A piezo valve actuated by an electric voltage, comprising:
a valve body (50) having at least one port (P1, P2) through which a fluid is introduced, an internal chamber (50a) communicating with the port, at least one valve seat (V1, V2) through which the fluid passes, and a circuit board (59) for supplying the electric voltage;
a valve unit (60) opening or closing the valve seat (V1, V2) of the valve body (50);
a piezo plate (80) bending-strained to either of opposite sides in response to the electric voltage supplied from the circuit board (59), thus moving the valve unit (60); and
a fastener (90) fastening an end of the piezo plate (80) to the valve body (50) such that the fastened position of the piezo plate (80) is adjustable with respect to the valve body (50) **characterised in that** the fastener (90) comprises:
an insulating stick (91) mounted to the end of the piezo plate (80) and protecting the end of the piezo plate in an insulating state;
a post (93) mounted to the valve body (50) and fitted through the insulating stick (91);
a biasing member (95) elastically biasing the insulating stick (91) fitted through the post (93); and
a stopper (NT) compressing the insulating stick (91) at a location opposed to the biasing member (95) and preventing the insulating stick (91) from being removed from the post (93).

2. The piezo valve as set forth in claim 1, wherein the stopper (NT) comprises:
a snap ring or a nut tightened to an end of the post.

3. The piezo valve according to claim 1, further comprising:
a force distributing unit (ST-1, 99a) for distributing a compressing force, applied from the stopper (NT) to the insulating stick (91), toward an outside part of the insulating stick based on the post (93).

4. The piezo valve according to claim 3, wherein the force distributing unit comprises:
a stepped part (ST-1) formed in the insulating stick (91) at a location around the post (93) and receiving the compressing force of the stopper (NT) by an outside flat surface thereof.

5. The piezo valve according to claim 1, further comprising:
a force concentrating unit (ST-2, 99a) for concentrating a biasing force, applied from the biasing member (95) to the insulating stick (91), toward an inside part of the insulating stick near the post (93).

6. The piezo valve according to claim 5, wherein the force concentrating unit comprises:
a boss (ST-2) protruding from the insulating stick (91) at a location around the post (93) and receiving the biasing force of the biasing member (95).

7. The piezo valve according to claim 1, wherein the valve seat of the valve body comprises:
a first valve seat (V1) and a second valve seat (V2) communicating with both the port (P1, P2) and the internal chamber (50a) and located at opposite positions.

8. The piezo valve according to claim 7, wherein the valve body comprises:
a casing (52) provided with the second valve seat, the port and the internal chamber therein, the casing being open at a part thereof thus exposing the internal chamber to an outside of the casing, with the circuit board installed in another part of the casing such that the circuit board is separated from the internal chamber;
a first cover (54) covering the open part of the casing and closing the internal chamber, and having the first valve seat linearly opposed to the second valve seat; and
a second cover (56) covering the casing at a location opposed to the first cover and protecting the circuit board.

9. The piezo valve according to claim 1, wherein the valve seat of the valve body comprises:
a first valve seat (V1) and a second valve seat (V2) communicating with both the port and the internal chamber and located at opposite positions, and
the valve unit (60) moved by the piezo plate (80) comprises:
a first plunger (61) and a second plunger (63) provided at opposed locations such that the first and second plungers respectively open or close the first valve seat (V1) and the second valve seat (V2) of the valve body (50) having the circuit board (59); and
a spring (65) elastically biasing both the first plunger (61) and the second plunger (63).

10. The piezo valve according to claim 9, further comprising:
a shift part (70) combined with the piezo plate (80) bending-strained in response to the electric voltage supplied from the circuit board of the valve body having the first valve seat, the second valve seat, the port and the internal chamber, the shift part moving the valve unit in response to a bending strain of the piezo plate fastened at the end thereof to the valve body by the fastener; and
a connection part (60) connecting the shift part (70) to both the first and second plungers (61, 63) of the valve unit (60).

11. The piezo valve according to claim 10, wherein the shift part (70) comprises:
a fork (71) receiving the valve unit (60) in a central portion thereof and connected to both the first and second plungers (61, 63) by the connection part.

12. The piezo valve according to claim 11, wherein the connection part comprises:
a hooking protrusion (61c, 63c) protruding from each of the first and second plungers (61, 63) and hooked by the fork (71).

13. The piezo valve as set forth in any one of claims 8 through 12, wherein the valve body comprises:
a plurality of valve bodies (50) having respective first valve seats, respective second valve seats, respective ports and respective internal chambers, which are arranged in parallel to each other, with respective valve units, respective shift parts, respective connection parts, respective piezo plates and respective fasteners installed in the internal chambers.

14. The piezo valve according to claim 2, wherein the valve seat of the valve body comprises:
a first valve seat (V1) and a second valve seat (V2) communicating with both the port and the internal chamber and located at opposite positions,
the valve unit (60) moved by the piezo plate (80) comprises:
a first plunger (61) and a second plunger (63) provided at opposed locations such that the first and second plungers respectively open or close the first valve seat and the second valve seat of the valve body (50) having the circuit board (59); and
a spring (65) elastically biasing both the first plunger (61) and the second plunger (63),
wherein the piezo valve further comprises:
a shift part (70) combined with the piezo plate (80) and moving the valve unit (60) in response to a bending strain of the piezo plate (80); and
a connection part (60) connecting the shift part (70) to both first plunger (61) and the second plunger (63) of the valve unit, wherein the piezo plate is insert-molded with the shift part and the insulating stick in opposite ends thereof, thus being integrated with both the shift part and the insulating stick into a single structure.

## Patentansprüche

1. Piezo-Ventil, welches durch eine elektrische Spannung angesteuert wird, umfassend:
einen Ventilkörper (50), der wenigstens einen Anschluss (P1, P2) hat, durch welchen ein Fluid eingeführt wird, eine interne Kammer (50a), welche mit dem Anschluss kommuniziert, wenigstens ein Ventilsitz (V1, V2), durch welches das Fluid strömt, und ein Schaltplatte (59) zur Bereitstellung der elektrischen Spannung;
eine Ventileinheit (60), die den Ventilsitz (V1, V2) des Ventilkörpers (50) öffnet oder schließt;
eine Piezo-Platte (80), die in Reaktion auf die elektrische Spannung, welche durch die Schaltplatte (59) bereitgestellt wird, durch Biegung zu einer von sich gegenüberliegenden Seiten gespannt wird, und somit die Ventileinheit (60) bewegt; und
einen Befestiger (90), der ein Ende der Piezo-Platte (80) an den Ventilkörper (50) derart befestigt, dass die befestigte Position der Piezo-Platte (80) bezüglich des Ventilkörpers (50) justierbar ist, **dadurch gekennzeichnet, dass** der Befestiger (90) umfasst:
einen isolierenden Stab (91), der an das Ende der Piezo-Platte (80) montiert ist und das Ende der Piezo-Platte (80) in einem isolierenden Zustand schützt;
eine Säule (93), die an den Ventilkörper(50) montiert ist und durch den isolierenden Stab (91) eingepasst ist;
ein Vorspannungs-Element (95), welches den isolierenden Stab (91) elastisch vorspannt, das durch die Säule (93) eingepasst ist; und
einen Stopper (NT), der den isolierenden Stab (91) an einer Stelle komprimiert, die dem Vorspannungs-Element (95) entgegengesetzt ist, und der verhindert, dass der isolierende Stab (91) von der Säule (93) entfernt wird.

2. Piezo-Ventil nach Anspruch 1, wobei der Stopper (NT) umfasst:
einen Einrast-Ring oder eine Mutter, der oder die an einem Ende der Säule festgezogen ist.

3. Piezo-Ventil nach Anspruch 1, weiterhin umfassend:
eine Kraft-Verteilungs-Einheit (ST-1, 99a), um eine Kompressionskraft, die von dem Stopper (NT) auf den isolierenden Stab (91) ausgeübt wird, in Richtung eines äußeren Teils des isolierenden Stabs zu verteilen, welcher auf der Säule aufsitzt.

4. Piezo-Ventil nach Anspruch 3, wobei die Kraft-Verteilungs-Einheit umfasst:
einen gestuften Teil (ST-1), der in dem isolierenden Stab (91) an einer Stelle um die Säule (93) herum geformt ist und der die Kompressionskraft des Stoppers (NT) durch eine äußere flache Oberfläche aufnimmt.

5. Piezo-Ventil nach Anspruch 1, weiterhin umfassend:
eine Kraft-Konzentrations-Einheit (ST-2, 99a) um eine Vorspannungskraft, die von dem Vorspannungs-Element (95) auf den isolierenden Stab (91) ausgeübt wird, auf einen inneren Teil des isolierenden Stabs nahe der Säule (93) zu konzentrieren.

6. Piezo-Ventil nach Anspruch 5, wobei die Kraft-Konzentrations-Einheit umfasst:
ein Vorsprung(ST-2), der von dem isolierenden Stab (91) an einer Stelle um die Säule (93) herum herausragt und der die Vorspannungskraft des Vorspannungs-Elements (95) aufnimmt.

7. Piezo-Ventil nach Anspruch 1, wobei der Ventilsitz des Ventilkörpers umfasst:
einen ersten Ventilsitz (V1) und einen zweiten Ventilsitz (V2), die sowohl mit dem Anschluss (P1, P2) als auch mit der internen Kammer (50a) kommunizieren und an gegenüberliegenden Positionen angeordnet sind.

8. Piezo-Ventil nach Anspruch 7, wobei der Ventilkörper umfasst:
ein Gehäuse (52), das darin den zweiten Ventilsitz, den Anschluss und die interne Kammer aufweist, wobei das Gehäuse an einem Teil davon offen ist, wodurch die interne Kammer für ein Äußeres des Gehäuses freigelegt wird, wobei die Schaltplatte in einem anderen Teil des Gehäuses derart installiert ist, dass die Schaltplatte von der internen Kammer getrennt ist;
eine erste Abdeckung (54), welche den offenen Teil des Gehäuses abdeckt und die interne Kammer abschließt, und wobei der erste Ventilsitz dem zweiten Ventilsitz linear gegenüberliegt; und
eine zweite Abdeckung (56), welche das Gehäuse an einer Stelle abdeckt, die der ersten Abdeckung gegenüberliegt, und welche die Schaltplatte schützt.

9. Piezo-Ventil nach Anspruch 1, wobei der Ventilsitz des Ventilkörpers umfasst:
einen ersten Ventilsitz (V1) und einen zweiten Ventilsitz (V2), die sowohl mit dem Anschluss (P1, P2) als auch mit der internen Kammer (50a) kommunizieren und an gegenüberliegenden Positionen angeordnet sind, und wobei die Ventileinheit (60), die von der Piezo-Platte (80) bewegt wird, umfasst:
einen ersten Plunger bzw. Presskolben (61) und einen zweiten Plunger bzw. Presskolben (63), die an gegenüberliegenden Stellen bereitgestellt sind, so dass der erste und der zweite Plunger jeweils den ersten Ventilsitz (V1) und den zweiten Ventilsitz (V2) des Ventilkörpers (50), der die Schaltplatte (59) hat, öffnen oder schließen; und
eine Feder (65), die sowohl den ersten Plunger (61) als auch den zweiten Plunger (63) elastisch vorspannt.

10. Piezo-Ventil nach Anspruch 9, weithin umfassend:
ein Verschiebe-Element (70), welches mit der Piezo-Platte (80) kombiniert ist, die durch Biegung in Reaktion auf die elektrische Spannung, die von der Schaltplatte des Ventilkörpers mit dem ersten Ventilsitz, dem zweiten Ventilsitz, dem Anschluss und der internen Kammer bereitgestellt wird, gespannt wird, wobei das Verschiebe-Element die Ventileinheit in Reaktion auf die Biegespannung der Piezo-Platte, die an ihrem Ende durch den Befestiger an dem Ventilkörper befestigt ist, bewegt; und
ein Verbindungs-Element (60), welches das Verschiebe-Element (70) sowohl mit dem ersten als auch mit dem zweiten Plunger (61, 63) der Ventileinheit (60) verbindet.

11. Das Piezo-Ventil nach Anspruch 10, wobei das Verschiebe-Element (70) umfasst:
eine Gabel (71), welche die Ventileinheit (60) an einer zentralen Stelle derselben fasst und sowohl mit dem ersten als auch mit dem zweiten Plunger (61, 63) durch das Verbindungs-Element verbunden ist.

12. Das Piezo-Ventil nach Anspruch 11, wobei das Verbindungs-Element umfasst:
ein einhakender Vorsprung (61c, 63c), welcher jeweils von dem ersten und dem zweiten Plunger (61, 63) herausragt und an der Gabel (71) einhakt.

13. Das Piezo-Ventil nach einem der Ansprüche 8 bis 12, wobei der Ventilkörper umfasst:
eine Vielzahl an Ventilkörpern (50) die jeweilige erste Ventilsitze, jeweilige zweite Ventilsitze, jeweilige Anschlüsse und jeweilige interne Kammern haben, welche parallel zueinander angeordnet sind, wobei jeweilige Ventileinheiten, jeweilige Verschiebe-Elemente, jeweilige Verbindungs-Elemente, jeweilige Piezo-Platten und jeweilige Befestiger in den internen Kammern installiert sind.

14. Das Piezo-Ventil nach Anspruch 2, wobei der Ventilsitz des Ventilkörpers umfasst:
einen ersten Ventilsitz (V1) und einen zweiten Ventilsitz (V2), die sowohl mit dem Anschluss als auch mit der internen Kammer kommunizieren und an gegenüberliegenden Positionen angeordnet sind,
wobei die Ventileinheit (60), die von der Piezo-Platte (80) bewegt wird, umfasst:
einen ersten Plunger (61) und einen zweiten Plunger (63), die an gegenüberliegenden Stellen bereitgestellt sind, so dass der erste und der zweite Plunger jeweils den ersten Ventilsitz (V1) und den zweiten Ventilsitz (V2) des Ventilkörpers (50), der die Schaltplatte (59) hat, öffnen oder schließen; und
eine Feder (65), die sowohl den ersten Plunger (61) als auch den zweiten Plunger (63) elastisch vorspannt,
wobei das Piezo-Ventil weiterhin umfasst:
ein Verschiebe-Element (70), welches mit der Piezo-Platte (80) kombiniert ist und welches die Ventileinheit (60) in Reaktion auf eine Biegespannung der Piezo-Platte bewegt; und
ein Verbindungs-Element (60), welches das Verschiebe-Element (70) sowohl mit dem ersten als auch mit dem zweiten Plunger (61, 63) der Ventileinheit verbindet, wobei die Piezo-Platte mit dem Verschiebe-Element und dem isolierenden Stab an entgegengesetzten Enden durch Insert-Molding bzw. Hinterspritzen geformt ist, wodurch das Verbindungs-Element sowohl mit dem Verschiebe-Element als auch mit dem isolierenden Stab in eine einzige Einheit integriert ist.

## Revendications

1. Soupape piézo-électrique actionnée par une tension électrique, comprenant :
un corps de soupape (50) ayant au moins un orifice (P1, P2) à travers lequel un fluide est introduit, une chambre interne (50a) communiquant avec l'orifice, au moins un siège de soupape (V1, V2) à travers lequel le fluide passe, et
une carte de circuit imprimé (59) pour fournir la tension électrique ;
une unité de soupape (60) ouvrant ou fermant le siège de soupape (V1, V2) du corps de soupape (50) ;
une plaque piézo-électrique (80) déformée par flexion vers l'une des faces opposées en réponse à la tension électrique fournie par la carte de circuit imprimé (59), déplaçant ainsi l'unité de soupape (60) ; et
une attache (90) fixant une extrémité de la plaque piézo-électrique (80) sur le corps de soupape (50) de sorte que la position fixée de la plaque piézo-électrique (80) est réglable par rapport au corps de soupape (50), **caractérisée en ce que** l'attache (80) comporte :
une perche isolante (91) montée à l'extrémité de la plaque piézo-électrique (80) et protégeant l'extrémité de la plaque piézo-électrique dans un état isolant ;
un montant (93) monté sur le corps de soupape (50) et ajusté à travers la perche isolante (91) ;
un élément de sollicitation (95) sollicitant élastiquement la perche isolante (91) ajustée à travers le montant (93) ; et
une butée (NT) comprimant la perche isolante (91) à un endroit opposé à l'élément de sollicitation (95) et empêchant la perche isolante (91) d'être retirée du montant (93).

2. Soupape piézo-électrique selon la revendication 1, dans laquelle la butée (NT) comprend :
un anneau élastique ou un écrou serré à une extrémité du montant.

3. Soupape piézo-électrique selon la revendication 1, comprenant en outre :
une unité de distribution de force (ST-1, 99a) pour distribuer une force de compression, appliquée à partir de la butée (NT) jusqu'à la perche isolante (91), en direction d'une partie extérieure de la perche isolante en s'appuyant sur le montant (93).

4. Soupape piézo-électrique selon la revendication 3, dans laquelle l'unité de distribution de force comprend :
une partie étagée (ST-1) formée dans la perche isolante (91) à un emplacement autour du montant (93) et recevant la force de compression de la butée (NT) par une surface plane extérieure de celle-ci.

5. Soupape piézo-électrique selon la revendication 1, comprenant en outre :
une unité de concentration de force (ST-2, 99a) pour concentrer une force de sollicitation, appliquée à partir de l'élément de sollicitation (95) jusqu'à la perche isolante (91), en direction d'une partie intérieure de la perche isolante à proximité du montant (93).

6. Soupape piézo-électrique selon la revendication 5, dans laquelle l'unité de concentration de force comprend :
un bossage (ST-2) faisant saillie de la perche isolante à un emplacement autour de la tige et recevant la force de sollicitation de l'élément de sollicitation (95).

7. Soupape piézo-électrique selon la revendication 1, dans laquelle le siège de soupape du corps de soupape comprend :
un premier siège de soupape (V1) et un deuxième siège de soupape (V2) communiquant à la fois avec l'orifice (P1, P2) et la chambre interne (50a) et situés à des positions opposées.

8. Soupape piézo-électrique selon la revendication 7, dans laquelle le corps de soupape comprend :
un boîtier (52) pourvu du second siège de soupape, de l'orifice et de la chambre interne dans celui-ci, le boîtier étant ouvert au niveau d'une partie de celui-ci exposant ainsi la chambre interne vers l'extérieur du boîtier, avec la carte de circuit imprimé installée dans une autre partie du boîtier de sorte que la carte de circuit imprimé est séparée de la chambre interne ;
un premier couvercle (54) qui couvre la partie ouverte du boîtier et ferme la chambre interne, et ayant le premier siège de soupape linéairement opposé au second siège de soupape ; et
un second couvercle (56) qui couvre le boîtier à un emplacement opposé au premier couvercle et protégeant la carte de circuit imprimé.

9. Soupape piézo-électrique selon la revendication 1, dans laquelle le siège de soupape du corps de soupape comprend :
un premier siège de soupape (V1) et un deuxième siège de soupape (V2) communiquant à la fois avec l'orifice et la chambre interne et situés à des positions opposées, et l'unité de soupape (60) déplacée par la plaque piézo-électrique (80) comprend :
un premier piston (61) et un deuxième piston (63) prévus à des emplacements opposés de telle sorte que les premier et second pistons ouvrent ou ferment respectivement le premier siège de soupape (V1) et le second siège de soupape (V2) du corps de soupape (50) ayant la carte de circuit imprimé (59) ; et
un ressort (65) sollicitant élastiquement à la fois le premier piston (61) et le second piston (63).

10. Soupape piézo-électrique selon la revendication 9, comprenant en outre :
une partie de changement (70) combinée à la plaque piézo-électrique (80) déformée par flexion en réponse à la tension électrique fournie par la carte de circuit imprimé du corps de soupape ayant le premier siège de soupape, le second siège de soupape, l'orifice et la chambre interne, la partie de changement déplaçant l'unité de soupape en réponse à une déformation par flexion de la plaque piézo-électrique fixée à l'extrémité de celle-ci vers le corps de soupape par l'attache ; et
une partie de raccordement (60) reliant la partie de changement (70) à la fois aux premier et second pistons de l'unité de soupape (60).

11. Soupape piézo-électrique selon la revendication 10, dans laquelle la partie de changement (70) comprend :
une fourche (71) de réception de l'unité de soupape (60) dans une partie centrale de celle-ci et reliée à la fois aux premier et second plongeurs (61, 63) par la partie de raccordement.

12. Soupape piézo-électrique selon la revendication 11, dans laquelle la partie de raccordement comprend :
une saillie d'accrochage (61c, 63c) faisant saillie à partir de chacun des premier et second pistons et accrochée par la fourche (71).

13. Soupape piézo-électrique selon l'une quelconque des revendications 8 à 13, dans laquelle le corps de soupape comprend :
une pluralité de corps de soupape (60) ayant des premiers sièges de soupape respectifs, des seconds sièges de soupape respectifs, des ports respectifs et des chambres internes respectives, qui sont disposés en parallèle les uns par rapport aux autres, avec des unités de soupape respectives, des parties de changement respectives, des parties de raccordement respectives, des plaques piézo-électriques respectives et des attaches respectives installées dans les chambres internes.

14. Soupape piézo-électrique selon la revendication 2, dans laquelle le siège de soupape du corps de soupape comprend :
un premier siège de soupape (V1) et un deuxième siège de soupape (V2) communiquant à la fois avec l'orifice et la chambre interne et situés à des positions opposées,
l'unité de soupape (60) déplacée par la plaque piézo-électrique (80) comprend :
un premier piston (61) et un second piston (63) prévus à des emplacements opposés de telle sorte que les premier et
second pistons ouvrent ou ferment respectivement le premier siège de soupape et le second siège de soupape du corps de soupape (50) ayant la carte de circuit imprimé (59), et
un ressort (65) sollicitant élastiquement à la fois le premier piston (61) et le deuxième piston (63),
dans lequel la soupape piézo-électrique comprend en outre :
une partie de changement (70) combinée à la plaque piézo-électrique (80) et déplaçant l'unité de soupape (60) en réponse à une déformation par flexion de la plaque piézo-électrique (80) ; et
une partie de raccordement reliant la partie de changement (70) à la fois au premier piston (61) et au second piston (63) de l'unité de soupape, la plaque piézo-électrique étant moulée par insertion avec la partie de changement et
la perche isolante à des extrémités opposées de celle-ci, étant ainsi intégrée avec à la fois la partie de changement et la perche isolante en une structure unique.
